# EUROPEAN PATENT APPLICATION

(11) **EP 2 456 050 A2**
(43) Date of publication of application: **23.05.2012**
(21) Application number: 10800040.7
(22) Date of filing: 15.07.2010
(51) Int. Cl.: H02K 5/04, H02K 5/06

(54) **MOTOR COVER AND MOTOR COMPRISING SAME**

(30) Priority: 15.07.2009 KR 20090064645
(71) Applicant: LG Innotek Co., Ltd., Seoul 100-714 (KR)
(72) Inventor: KIM, Goonchul, Seoul 100-714 (KR)
(74) Representative: Novagraaf Technologies
(86) International application number: PCT/KR2010/004595
(87) International publication number: WO 2011/008029

(57) **Abstract**

The present invention relates to a motor cover including: a first cover formed at one side with a housing coupling unit that is coupled with a motor housing; a second cover coupled to the other side of the first cover; and alignment units formed at the first and second covers to prevent a twist between the two covers by aligning an assembly position when the first cover and the second covers are assembled, and a motor including the motor cover, whereby a twist can be prevented when the motor cover is assembled and a dimensional accuracy can be enhanced.

## Description

### [Technical Field]

The teachings in accordance with the exemplary embodiments of this invention relate generally to a motor cover and a motor including the same.

### [Background Art]

Generally, a motor includes a housing, a stator formed inside the housing for being applied with a power, a rotor rotating by interacting with the stator, and a motor cover mounted on the housing. The stator in turn includes a stator core and a stator coil wound on the stator core, and the rotor includes a plurality of magnets arranged at an inner circumferential surface of the stator and a rotation shaft to which the magnets are secured.

The housing is formed at one side with an opening through which the stator and the rotor are inserted. The opening is mounted with a cover. The cover must be accurately mounted to the housing and free from twisting. However, the accurate mounting is not that easy and the twisting is hard to be prevented.

### [Disclosure]

### [Technical problem]

The present invention is directed to solve the aforementioned problems, disadvantages or shortcomings, and is to provide a motor cover capable of preventing a twist during assembly of the motor cover and improving a dimensional accuracy, and a motor including the motor cover.

Technical problems to be solved by the present invention are not restricted to the above-mentioned, and any other technical problems not mentioned so far will be clearly appreciated from the following description by skilled in the art.

### [Technical Solution]

An object of the invention is to solve at least one or more of the above problems and/or disadvantages in whole or in part and to provide at least the advantages described hereinafter. In order to achieve at least the above objects, in whole or in part, and in accordance with the purposes of the invention, as embodied and broadly described, and in one general aspect of the present invention, there is provided a motor cover, comprising: a first cover formed at one side with a housing coupling unit that is coupled with a motor housing; a second cover coupled to the other side of the first cover; and alignment units formed at the first and second covers to prevent a twist between the two covers by aligning an assembly position when the first cover and the second covers are assembled.

Preferably, the first cover is made of resin material and formed by injection molding.

Preferably, the second cover is made of a metal material to reinforce strength of the cover.

Preferably, an upper margin of the first cover is formed with a first staircase sill and a margin of the second cover is formed with a second staircase sill that is press-fitted into the first staircase sill.

Preferably, an upper surface of the first cover is protrusively formed with a terminal housing for power connection and a lug unit, respectively, and the second cover is formed with a first accommodation groove for accommodating the terminal housing, and a second accommodation groove for accommodating the lug unit, respectively.

Preferably, the position alignment unit includes at least one or more press-fitting grooves formed on the upper surface of the first cover, and at least one or more press-fitting lugs formed at a lower surface of the second cover that are press-fitted into the press-fitting grooves.

Preferably, the position alignment unit includes at least one or more press-fitting lugs formed on the upper surface of the first cover, and at least one or more press-fitting grooves formed at a lower surface of the second cover that are press-fitted by the press-fitting lugs.

In another general aspect of the present invention, there is provided a motor, comprising: a motor including a motor housing, a stator secured inside the motor housing, a rotor arranged at an inner surface of the stator to rotate by interacting with the stator, and a motor cover coupled to an opening of the motor housing, wherein the motor cover includes a first cover formed at a lower surface with a housing coupling unit coupled to the motor housing, a second cover coupled to an upper surface of the first cover, and position alignment units formed at the first and second covers to prevent a twist between the two covers by aligning an assembly position when the first cover and the second covers are assembled.

### [Advantageous Effects]

The motor cover thus configured according to the present invention has advantageous effects in that a position alignment unit is formed on each of a first cover and a second cover to allow an assembly position of the two covers to be accurately aligned when the two covers are mutually assembled and the position alignments are press-fitted, thereby making it easy to assemble and to prevent occurrence of twist in the assembly process.

### [Description of Drawings]

The teachings of the present invention can be readily understood by considering the following detailed description in conjunction with the accompanying drawings, in which:
FIG. 1 is a plan view of a motor according to an exemplary embodiment of the present invention;
FIG. 2 is a plan view of a motor cover according to an exemplary embodiment of the present invention;
FIGS. 3 and 4 are an exploded perspective views of a motor cover according to an exemplary embodiment of the present invention; and

### [Best Mode]

Advantages and features of the present invention may be understood more readily by reference to the following detailed description of exemplary embodiments and the accompanying drawings. Detailed descriptions of well-known functions, configurations or constructions are omitted for brevity and clarity so as not to obscure the description of the present invention with unnecessary detail. Thus, the present invention is not limited to the exemplary embodiments which will be described below, but may be implemented in other forms. In the drawings, the width, length, thickness, etc. of components may be exaggerated or reduced for the sake of convenience.

Furthermore, throughout the descriptions, the same reference numerals will be assigned to the same elements in the explanations of the figures, and explanations that duplicate one another will be omitted.

Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification. The terms "a" and "an" herein do not denote a limitation of quantity, but rather denote the presence of at least one of the referenced item.

As may be used herein, the terms "substantially" and "approximately" provide an industry-accepted tolerance for its corresponding term and/or relativity between items. Such an industry-accepted tolerance ranges from less than one percent to ten percent and corresponds to, but is not limited to, component values, angles, et cetera.

Now, exemplary embodiment of the present invention will be described in detail with reference to the accompanying drawings.

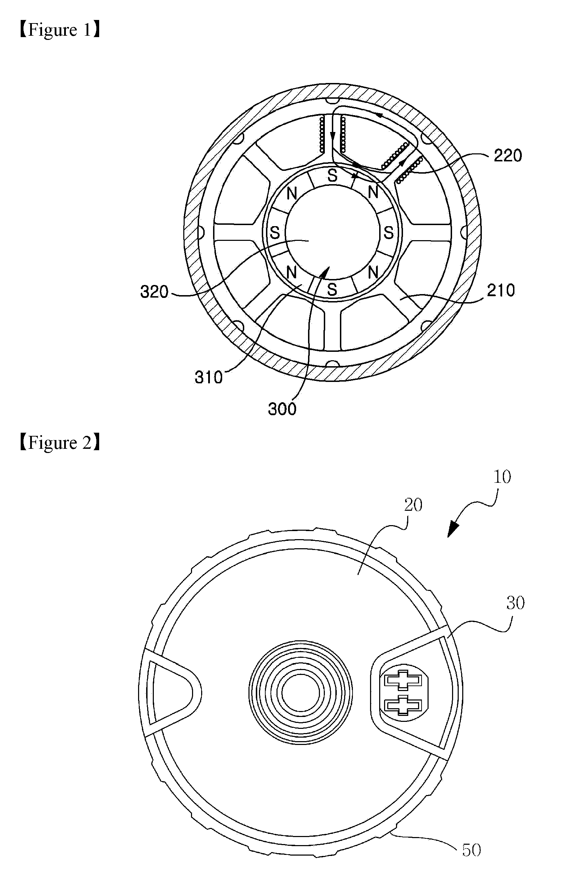

FIG.1 is a plan view of a motor according to an exemplary embodiment of the present invention.

A motor according to an exemplary embodiment of the present invention includes a housing (100), a stator (200) arranged inside the housing (100) for being applied with a power, a rotor (300) arranged at an inner circumferential surface of the stator (200) to rotate by interacting with the stator (200), and a motor cover coupled to the housing (100).

The stator (200) includes a stator core (210) and a stator coil (220) wound on the stator core (210) for being applied with a power. The rotor (300) includes a plurality of magnets (310) arranged at an inner circumferential surface of the stator (200), each at a predetermined gap to a circumferential direction, and a rotating rotation shaft (320) to which the magnets are secured.

### [Mode for Invention]

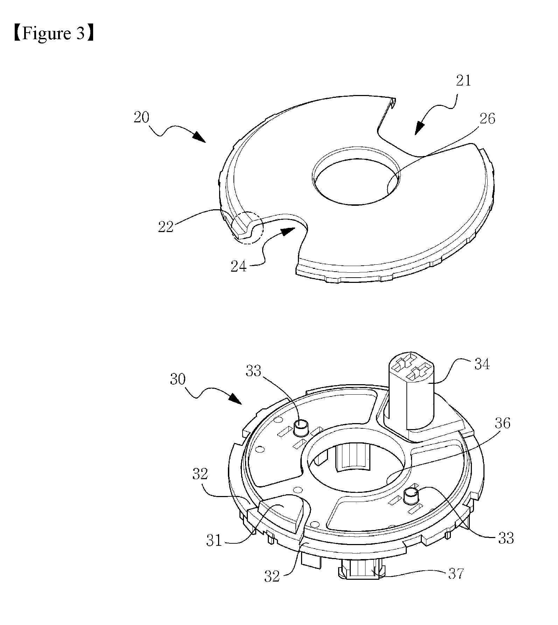

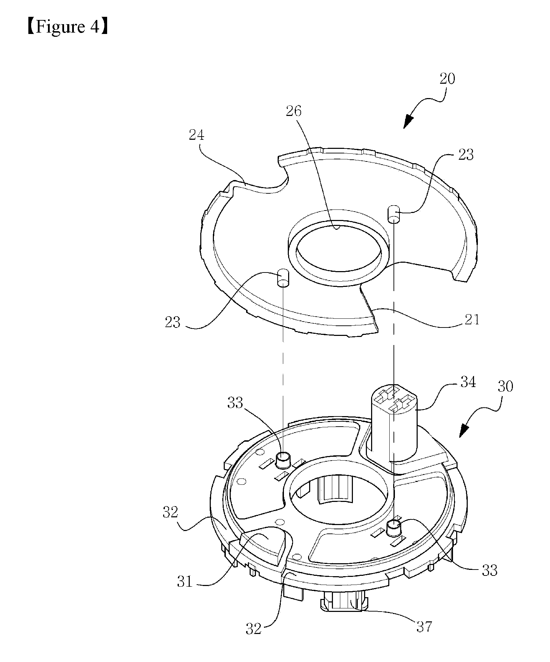

FIG.2 is a plan view of a motor cover according to an exemplary embodiment of the present invention, FIGS.3 and 4 are an exploded perspective views of a motor cover according to an exemplary embodiment of the present invention.

The motor cover (10) includes a first cover (30) coupled to the housing (100), and a second cover (20) coupled to the first cover to reinforce the strength.

The first cover is made of resin material and formed by injection molding. The first cover (30) takes the shape of a disk, is centrally formed with a through hole (36) through which the rotation shaft (320) passes, formed at a lower surface with a housing coupling unit (37) coupled to the housing (100), and formed at an upper surface with a second cover (20).

The housing coupling unit (37) may take any form as long as it can be air-tightly coupled to an opened upper surface of the housing (100). An upper surface of the first cover (30) is protrusively formed with a terminal housing (34) for power connection, and a lug unit (31) discretely protruded from the terminal housing (34) at a right angle. Furthermore, an upper margin of the first cover (30) is formed with a first staircase sill (32).

The second cover (20) is coupled to the upper surface of the first cover (30) and serves to reinforce the strength of the motor. The second cover (20) is made of a metal material, and may be made of a steel material which is easy in strength reinforcement.

The second cover (20) is centrally formed with a through hole (26) through which the rotation shaft (320) passes, and is formed at a marginal circumference with a second staircase sill (22) press-fitted into the first staircase sill (32) of the first cover (30). Furthermore, the second cover (20) is formed at one side with a first accommodation groove (21) accommodating the terminal housing (34) and a second accommodation groove (24) accommodating the lug unit (31).

The first cover (30) and the second cover (20) are formed with position alignment units (33, 23) capable of easily assembling the first cover (30) and the second cover by accurately aligning an assembling position, and preventing occurrence of a twist when the first cover (30) and the second cover (20) are assembled. The position alignment units (33. 23) includes at least one or more press-fitting grooves (33) formed on the upper surface of the first cover (30), and at least one or more press-fitting lugs (23) formed at a lower surface of the second cover (20) that are press-fitted into the press-fitting grooves (33).

The press-fitting groove (33) is so structured as to have a groove protruded on the upper surface of the first cover (30) and to allow the press-fitting lug (23) to be press-fitted thereinto. Although each of the press-fitting groove (33) and the press-fitting lug (23) are shaped of a disk on the drawing, a cross-sectional shape of each of the press-fitting groove (33) and the press-fitting lug (23) may take various shapes including a polygonal shape, and an oval shape.

In a case the press-fitting lug (23) of the second cover (20) is press-fitted into the press-fitting groove (33) of the first cover (30) when the first cover (30) and the second cover (20) are mutually assembled, an assembling position between the first cover (30) and the second cover (20) accurately becomes aligned to enable an easy assembly and to prevent occurrence of a twist between the first and second covers (30, 20).

Furthermore, a margin of the first cover (30) is formed with an O-ring assembly unit (50) formed with an O-ring, which can improve a sealing structure by enhancing a dimensional accuracy of the O-ring assembly unit (50).

A position alignment unit according to another exemplary embodiment of the present invention may include at least one or more press-fitting lugs formed on the upper surface of the first cover, and at least one or more press-fitting grooves formed at a lower surface of the second cover that are press-fitted by the press-fitting lugs.

While the present invention has been particularly shown and described with reference to exemplary embodiments thereof, the general inventive concept is not limited to the above-described embodiments. It will be understood by those of ordinary skill in the art that various changes and variations in form and details may be made therein without departing from the spirit and scope of the present invention as defined by the following claims.

### [Industrial Applicability]

The present invention has an industrial applicability in that a position alignment unit is formed on each of a first cover and a second cover to allow an assembly position of the two covers to be accurately aligned when the two covers are mutually assembled and the position alignments are press-fitted, thereby making it easy to assemble and to prevent occurrence of twist in the assembly process.

## Claims

1. A motor cover, comprising:
a first cover formed at one side with a housing coupling unit that is coupled with a motor housing;
a second cover coupled to the other side of the first cover; and
alignment units formed at the first and second covers to prevent a twist between the two covers by aligning an assembly position when the first cover and the second covers are assembled.

2. The motor cover of claim 1, wherein the first cover is made of resin material and formed by injection molding.

3. The motor cover of claim 1, wherein the second cover is made of a metal material to reinforce strength of the cover.

4. The motor cover of claim 1, wherein an upper margin of the first cover is formed with a first staircase sill and a margin of the second cover is formed with a second staircase sill that is press-fitted into the first staircase sill.

5. The motor cover of claim 1, wherein an upper surface of the first cover is protrusively formed with a terminal housing for power connection and a lug unit, respectively, and the second cover is formed with a first accommodation groove for accommodating the terminal housing, and a second accommodation groove for accommodating the lug unit, respectively.

6. The motor cover of claim 1, wherein the position alignment unit includes at least one or more press-fitting grooves formed on the upper surface of the first cover, and at least one or more press-fitting lugs formed at a lower surface of the second cover that are press-fitted into the press-fitting grooves.

7. The motor cover of claim 1, wherein the position alignment unit includes at least one or more press-fitting lugs formed on the upper surface of the first cover, and at least one or more press-fitting grooves formed at a lower surface of the second cover that are press-fitted by the press-fitting lugs.

8. A motor, comprising:
a motor housing,
a stator secured inside the motor housing, a rotor arranged at an inner surface of the stator to rotate by interacting with the stator, and
a motor cover coupled to an opening of the motor housing,
wherein the motor cover comprising,
a first cover formed at a lower surface with a housing coupling unit coupled to the motor housing,
a second cover coupled to an upper surface of the first cover, and
position alignment units formed at the first and second covers to prevent a twist between the two covers by aligning an assembly position when the first cover and the second covers are assembled.

9. The motor of claim 8, wherein the first cover is made of resin material and formed by injection molding.

10. The motor of claim 8, wherein the second cover is made of a metal material to reinforce strength of the cover.

11. The motor of claim 8, wherein an upper margin of the first cover is formed with a first staircase sill and a margin of the second cover is formed with a second staircase sill that is press-fitted into the first staircase sill.

12. The motor of claim 8, wherein an upper surface of the first cover is protrusively formed with a terminal housing for power connection and a lug unit, respectively, and the second cover is formed with a first accommodation groove for accommodating the terminal housing, and a second accommodation groove for accommodating the lug unit, respectively.

13. The motor of claim 8, wherein the position alignment unit includes at least one or more press-fitting grooves formed on the upper surface of the first cover, and at least one or more press-fitting lugs formed at a lower surface of the second cover that are press-fitted into the press-fitting grooves.

14. The motor of claim 8, wherein the position alignment unit includes at least one or more press-fitting lugs formed on the upper surface of the first cover, and at least one or more press-fitting grooves formed at a lower surface of the second cover that are press-fitted by the press-fitting lugs.
